# EUROPÄISCHE PATENTSCHRIFT

(11) **EP 0 631 813 B1**
(45) Veröffentlichungstag und Bekanntmachung des Hinweises auf die Patenterteilung: **07.01.1998**
(21) Anmeldenummer: 93810463.5
(22) Anmeldetag: 30.06.1993
(51) Int. Cl.: B01J 19/32, B01J 35/04, B01D 3/00

(54) **Katalysierender Festbettreaktor**
Catalysing fixed-bed reactor
Réacteur à lit fixe à l'action catalytique

(43) Veröffentlichungstag der Anmeldung: 04.01.1995
(73) Patentinhaber: Sulzer Chemtech AG, CH-8404 Winterthur (CH)
(72) Erfinder: Stringaro, Jean-Paul, Dr., CH-8180 Bülach (CH)
(74) Vertreter: Heubeck, Bernhard

(56) Entgegenhaltungen:
- EP-A- 0 428 265
- WO-A-90/02603

## Beschreibung

Die Erfindung betrifft einen katalysierenden Festbettreaktor gemäss Oberbegriff von Anspruch 1. Eine derartig Vorrichtung ist aus der EP-PS 0 396 650 bekannt. Dort ist ein Ausführungsbeispiel in bezug auf Fig.5 beschrieben, nämlich eine Vorrichtung, die aus parallel zueinander angeordneten, gefalteten Lagen besteht, die jeweils einen Doppelmantel aufweisen, dessen Wände aus einem für die Reaktanden durchlässigen und für das Katalysatormaterial undurchlässigen Material bestehen. In den von den Doppelwänden gebildeten Zwischenräumen ist ein entsprechend dem Verwendungszweck gewähltes Katalysatormaterial eingebracht. Die Faltungen der Lagen weisen einen Winkel zur Längsachse (d.h. zur Hauptströmungsrichtung) der Vorrichtung auf, wobei sich die Faltungen von benachbarten Lagen kreuzen.

Die Strömungskanäle zwischen den Packungsteilen bilden eine statische Mischerstruktur. Dank dieser Mischerstruktur ergibt sich ein für die Reaktion vorteilhafter Temperatur-, Geschwindigkeits- und Konzentrationsausgleich über den Kolonnenquerschnitt. Vorteilhaft ist überdies, dass die Druckabfälle relativ gering sind.

Nachteil der bekannten Vorrichtung ist, dass beim Füllen des Doppelmantels eines Packungsteils mit Katalysatormaterial wegen mangelnder Steifigkeit der Wände eine unerwünschte Ausweitung des Zwischenraums entsteht. Es ist Aufgabe der Erfindung, ein Packungselement zu schaffen, für dessen Lagen eine derartige Ausweitung nicht auftritt. Diese Aufgabe wird durch die kennzeichnenden Merkmale des Anspruchs 1 gelöst.

Die abhängigen Ansprüche betreffen vorteilhafte Ausführungsformen des erfindungsgemässen Festbettreaktors. Die Erfindung bezieht sich auch auf die Anwendung dieser Vorrichtung auf einen katalytischen Destillationsprozess (vgl. EP-PS 0 396 650), zum Herstellen z.B. von MTBE (Methyl-tertiär-Butyl-Ether), ETBE (Ethyl-tertiär-Butyl-Ether) oder TAME (tertiär-Amyl-Methyl-Ether).

Ist der erfindungsgemässe Reaktor für zwei fluide Phasen - beispielsweise eine gasförmige und eine flüssige - vorgesehen, so können die beiden Phasen sowohl im Gegenstrom als auch im Gleichstrom geführt werden. Die zwei Phasen können auch beide flüssig sein, wenn sie nicht vermischbar sind und verschiedene Dichten aufweisen. Der Reaktor kann beispielsweise auch eine Rieselbett- oder eine Blasenkolonne sein.

Nachfolgend wird die Erfindung anhand der Zeichnungen näher beschrieben. Es zeigen:
- Fig. 1: ausschnittsweise eine obere Zone eines Packungsteils des erfindungsgemässen Reaktors,
- Fig. 2: einen Querschnitt in Hauptströmungsrichtung durch das Packungsteil der Fig.1
- Fig. 3: eine perspektivische Ansicht eines Packungselements des erfindungsgemässen Reaktors,
- Fig. 4: ausschnittsweise einen Längsschnitt durch einen erfindungsgemässen Reaktor,
- Fig. 5: ausschnittsweise die Wände eines Packungsteils in Explosionsdarstellung,
- Fig. 6: einen Querschnitt durch das Packungsteil der Fig.5 mit in Verbindung stehenden Wänden und
- Fig. 7: ein Abschlusselement für den Rand desselben Packungsteils.

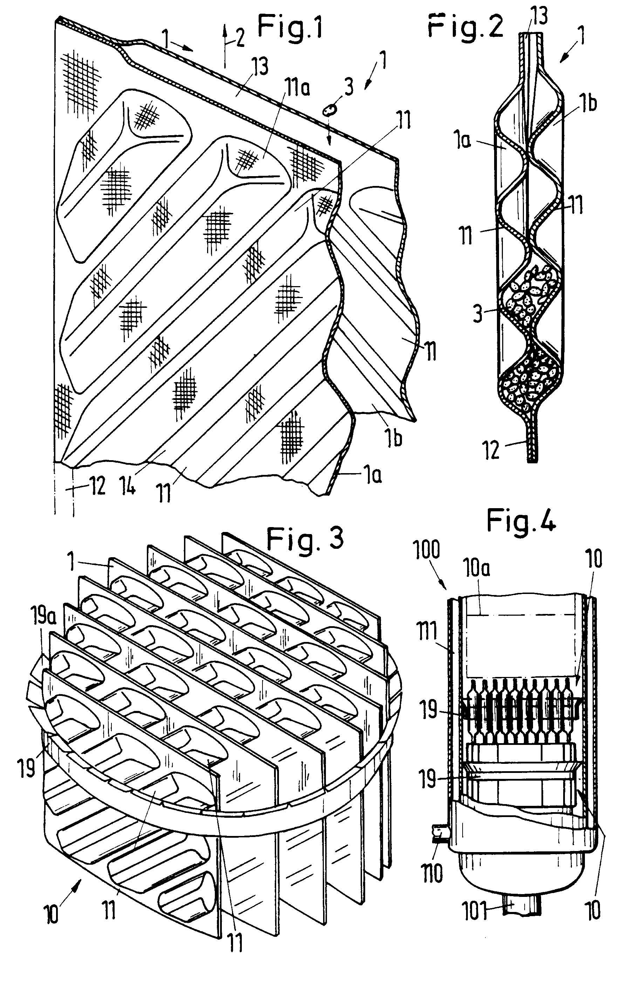

Das in Fig.1 gezeigte Packungsteil 1 hat die beiden Wände 1a und 1b. Diese Wände, die beispielsweise aus Drahtgewebe bestehen, sind mit einer Erhebungen 11 aufweisenden Profilierung ausgebildet. An seitlichen Randzonen 12 sind die beiden Wände beispielsweise verschweisst, sodass sie ein gegen oben offenes Kissen bilden. Die walmdachartigen Erhebungen 11, die einen Winkel gegen die Hauptströmungsrichtung 2 einschliessen, bilden im Innern des Packungsteils Kanäle mit Abschlüssen 11a. Die beiden Wände 1a und 1b haben im wesentlichen die gleiche Profilierung und sind solcherart angeordnet, dass die inneren Kanäle, die gegeneinander offen sind, sich kreuzen. Durch die obere Öffnung 13 kann katalytisches Material 3 in Granulatform eingefüllt werden. Fig.2 zeigt einen Schnitt durch das Packungsteil 1, das teilweise mit dem schüttgutartigen Material 3 gefüllt ist.

Im Innenbereich 14 des Packungsteils 1 berühren sich die Wände 1a und 1b punktuell; zumindest bei einem Teil dieser Berührungspunkte sind die beiden Wände miteinander verbunden, beispielsweise durch Punktverschweissung oder durch Nieten.

Für das Füllen der Packungsteile 1 mit dem Katalysatormaterial 3 ist eine vibrierende Vorrichtung hilfreich. Nach dem Füllen wird der obere Rand bei der Öffnung 13 mit Vorteil jeweils mit Klammern oder andern Verbindungsmitteln verschlossen. Diese Verbindungsmittel sollen leicht entfernbar und ersetzbar sein, damit für den Fall, dass das Katalysatormaterial ausgetauscht werden muss, die Packungselemente einfach entleerbar und somit gut wiederverwendbar sind.

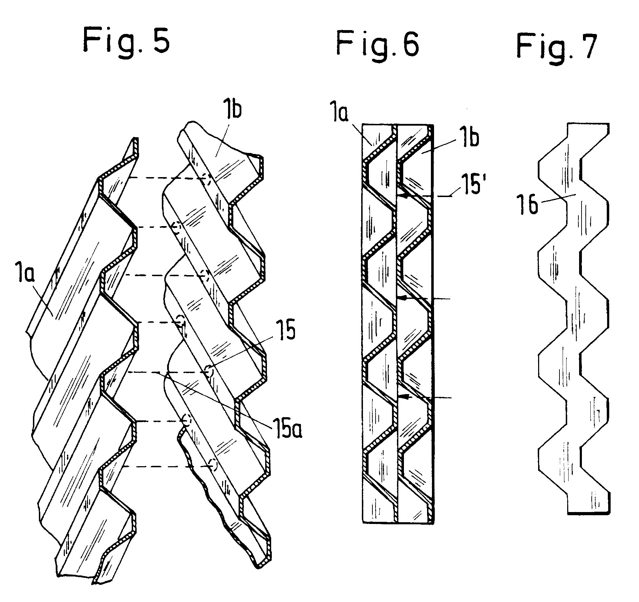

Das in Fig.3 dargestellte Packungselement 10 ist aus acht Lagen - bestehend aus Packungsteilen 1 - aufgebaut. Dieses Packungselement 10 ist für ein Reaktorgehäuse mit kreisförmigem Querschnitt vorgesehen ist. Ein Kragen 19 mit lappenartigen Vorsprüngen 19a umschliesst das Packungselement. Die seitlichen Erhebungen 11 der Packungsteile 1 bilden Strömungskanäle, die sich kreuzen und gegeneinander offen sind.

Fig.4 zeigt den unteren Teil eines erfindungsgemässen Reaktors 100, in dem die Packungselemente 10 stapelartig angeordnet sind, wobei benachbarte Packungselemente jeweils um einen Winkel von 90° gegeneinander versetzt sind. Die oberen Packungselemente sind mit den strichpunktierten Randlinien 10a angedeutet. Der Stutzen 101 ist für den Zu- oder Abfluss des fluidförmigen Mediums vorgesehen. Für die Abfuhr von Reaktionswärme ist ein Kühlmantel 111 (Kühlmittelstutzen 110) vorgesehen.

Fig.5 illustriert anhand eines zweiten Beispiels die kreuzweise Anordnung der beiden profilierten Wände 1a und 1b eines Packungsteils 1. Indem die beiden Wände entlang den gestrichelt gezeichneten Linien 15a zusammengerückt werden, treten sie bei den Berührungspunkten 15 in Kontakt. Die Wände des vorliegenden Ausführungsbeispiels sind wellenförmig und bestehen aus einem folienartigem Material, das eine nicht dargestellte Perforation aufweist. Diese Perforation ermöglicht den Durchtritt des fluidförmigen Mediums, hält aber das Katalysatormaterial im Innenraum zurück.

Fig.6 ist ein Schnitt durch das Packungsteil 1 der Fig.5 entlang einer nicht gezeichneten Mittellinie zwischen den angedeuteten Kontaktpunkten 15. Die Pfeile 15' weisen auf Stellen, wo sich Kontaktpunkte 15 befinden, die auf einer geraden Linie liegen. Werden die Wände 1a und 1b so bemessen und angeordnet, dass die Ränder des Packungsteils 1 das Aussehen des Schnitts gemäss Fig.6 annehmen, so können die Innenkanäle durch - wie in Fig.7 dargestellt - streifenförmige Abschlusselemente 16 abgeschlossen werden. Als Kanalabschlüsse kommen beispielsweise auch rohrförmige, schlangenartig gebogene Abschlusselemente in Frage, die am Rand der Packungsteile 1 zwischen den Wänden 1a und 1b eingelegt und befestigt werden.

In der EP-PS 0 396 650 ist vorgesehen, auch Katalytlösungen oder flüssige Katalysatormaterialien zu verwenden. Dies ist auch für den hier beschriebenen Reaktor möglich, wenn beispielsweise die Wände der Packungsteile zweischichtig ausgebildet werden, wobei die eine Schicht aus einer flüssigkeitsdichten, für das fluidförmige Medium permeablen Membran besteht und die andere Schicht eine stabile, perforierte Stützstruktur bildet.

## Patentansprüche

1. Katalysierender Festbettreaktor (100) für mindestens ein fluidförmiges Medium, mit stapelartig angeordneten Packungselementen (10), die jeweils aus längs der Hauptströmungsrichtung (2) ausgerichteten Lagen zusammengesetzt sind, wobei die Lagen durch kissenartige Packungsteile (1) gebildet sind, die für das Medium durchlässige Wände (1a, 1b) aufweisen und ein Katalysatormaterial (3) enthalten, und wobei zwischen den Packungsteilen Strömungskanäle, die sich kreuzen und gegeneinander offen sind, vorhanden sind, dadurch gekennzeichnet, dass die Innenräume der Packungsteile durch parallele Kanäle (11) gebildet sind, die in Form einer reliefartigen Profilierung der Wände (1a, 1b) vorliegen, dass diese Kanäle (11) sich kreuzen, gegeneinander offen sind sowie am Rand (12) der Packungsteile abgeschlossen sind, dass im Innenbereich der Packungsteile die Wände sich punktuell berühren und dass zumindest bei einem Teil dieser Berührungspunkte (15) die beiden Wände miteinander verbunden sind.

2. Festbettreaktor nach Anspruch 1, dadurch gekennzeichnet, dass das katalytische Material (3) in Form eines schüttgutartigen Granulats vorliegt.

3. Festbettreaktor nach Anspruch 1 oder 2, dadurch gekennzeichnet, dass die Wände (1a, 1b) der Packungsteile aus Drahtgewebe bestehen.

4. Festbettreaktor nach einem der Ansprüche 1 bis 3, dadurch gekennzeichnet, dass die Profilierung der Wände (1a, 1b) durch walmdachartige Erhebungen (11) gebildet ist.

5. Festbettreaktor nach einem der Ansprüche 1 bis 3, dadurch gekennzeichnet, dass die Wände (1a, 1b) wellenförmig sind und aus perforiertem, folienartigem Material bestehen und dass die Kanalabschlüsse am Rand der Packungsteile durch Abschlusselemente (16) gebildet sind.

6. Festbettreaktor nach einem der Ansprüche 1 bis 5, dadurch gekennzeichnet, dass der obere Rand der Packungsteile jeweils mit Verbindungsmitteln, insbesondere Klammern, verschlossen ist, welche leicht entfernbar und ersetzbar sind, und dass an diesem Rand die Wände (1a, 1b) biegbar ausgebildet sind, sodass Katalysatormaterial durch die derart gebildete Öffnung (13) zuführbar oder entnehmbar ist.

7. Festbettreaktor nach Anspruch 1, dadurch gekennzeichnet, dass die Wände (1a, 1b) der Packungsteile zweischichtig ausgebildet sind, wobei die eine Schicht aus einer flüssigkeitsdichten, für das Medium permeablen Membran besteht und die andere Schicht eine stabile, perforierte Stützstruktur bildet, und dass der Katalysator in Form einer Flüssigkeit vorliegt.

8. Verwendung des Festbettreaktors nach einem der Ansprüche 1 bis 7 für einen katalytischen Destillationsprozess, bei dem eine katalytische Reaktion mit einem Destillations- oder Rektifikationsprozess kombiniert ist.

## Claims

1. A catalysing fixed-bed reactor (100) for at least one fluid medium, having packing elements (10) disposed in stacks, each of which is composed of layers aligned along the main direction of flow (2), wherein the layers are formed by cushion-like packing parts (1), which comprise walls (1a, 1b) permeable to the medium and contain a catalyst material (3), and wherein flow ducts, which intersect and are open to one another, are provided between the packing parts,
**characterised in that** the interior spaces of the packing parts are formed by parallel ducts (11), which are provided in the form of a relief-type profiling of the walls (1a, 1b),
**in that** these ducts (1) intersect, are open to one another and are also sealed at the edge (12) of the packing parts,
**in that** the walls touch in punctiform manner in the inner region of the packing parts,
**and in that** the two walls are connected to one another at least at one part of these contact points (15).

2. A fixed-bed reactor according to Claim 1,
**characterised in that** the catalytic material (3) is provided in the form of a granulate which is a bulk-like material.

3. A fixed-bed reactor according to Claim 1 or 2,
**characterised in that** the walls (1a, 1b) of the packing parts are made from wire cloth.

4. A fixed-bed reactor according to one of Claims 1 to 3,
**characterised in that** the profiling of the walls (1a, 1b) is formed by raised portions similar to hipped roofs (11).

5. A fixed-bed reactor according to one of Claims 1 to 3,
**characterised in that** the walls (1a, 1b) are wave-shaped and are made from perforated, foil-like material, and in that the duct-closing members at the edge of the packing parts are formed by sealing elements (16).

6. A fixed-bed reactor according to one of Claims 1 to 5,
**characterised in that** the upper edge of the packing parts is sealed with connection means, in particular clamps, which can be easily removed and replaced, and in that at this edge the walls (1a, 1b) are flexibly constructed so that catalyst material can be supplied or removed through the aperture (13) formed in this manner.

7. A fixed-bed reactor according to Claim 1,
**characterised in that** the walls (1a, 1b) of the packing parts are constructed in two layers, wherein the one layer is made from a fluid-tight membrane permeable to the medium and the other layer forms a stable, perforated support structure,
**and in that** the catalyst is provided in the form of a fluid.

8. Use of the fixed-bed reactor according to one of Claims 1 to 7 for a catalytic distillation process, in which a catalytic reaction is combined with a distillation or rectification process.

## Revendications

1. Réacteur à lit fixe à action catalytique (100) pour au moins un milieu fluide avec éléments de garnissage (10) agencés en pile qui se composent de couches dirigées le long de la direction principale d'écoulement (2), les couches étant formées de parties de garnissage (1) en forme de coussins, qui présentent des parois (1a, 1b) perméables aux milieu et qui contiennent un matériau de catalyseur (3), et où entre les parties de garnissage sont prévues des canaux d'écoulement qui se croisent et sont mutuellement ouverts, caractérisé en ce que les espaces internes des parties de garnissage sont formés de canaux parallèles (11) qui se présentent sous la forme d'un profilage en relief des parois (1a, 1b) en ce que ces canaux (11) se croisent sont mutuellement ouverts et sont fermés au bord (12) des parties de garnissage, en ce que dans la zone interne des parties de garnissage les parois se touchent ponctuellement et en ce qu'au moins pour une partie de ces points de contact (1), les deux parois sont reliés l'une à l'autre.

2. Réacteur à lit fixe selon la revendication 1 caractérisé en ce que le matériau catalytique (3) est présent sous la forme d'un granulé en vrac.

3. Réacteur à lit fixe selon la revendication 1 ou 2 caractérisé en ce que les parois (1a, 1b) des parties de garnissage se composent d'un treillage.

4. Réacteur à lit fixe selon l'une des revendications 1 à 3 caractérisé en ce que le profilage des parois (1a, 1b) est formé de surélévations (11) en forme de toit en croupe.

5. Réacteur à lit fixe selon l'une des revendications 1 à 3 caractérisé en ce que les parois (1a, 1b) sont de forme ondulée et se composent d'un matériau perforé, en feuille et en ce que les fermetures des canaux au bord des parties de garnissage sont formées par des éléments de fermeture (16).

6. Réacteur à lit fixe selon l'une des revendications 1 à 5 caractérisé en ce que le bord supérieur des parties de garnissage est obturé par des moyens de liaison, en particulier des agrafes qui sont faciles à enlever et à remplacer et en ce qu'à ce bord les parois (1a, 1b) sont de configuration flexible de manière que le matériau du catalyseur puis se être introduit ou enlevé par l'ouverture (13) ainsi formée.

7. Réacteur à lit fixe selon la revendication 1 caractérisé en ce que les parois (1a, 1b) des parties de garnis sage sont formées en deux couches, une couche se composant d'une membrane étanche aux liquides, perméable au milieu et l'autre couche étant formée d'une structure de soutien stable et perforée et en ce que le catalyseur est présent sous la forme d'un liquide.

8. Utilisation du réacteur à lit fixe selon l'une des revendications 1 à 7 pour un procédé de distillation catalytique où une réaction catalytique est combinée à un procédé de distillation ou de rectification.
